# EUROPEAN PATENT SPECIFICATION

(11) **EP 2 446 068 B1**
(45) Date of publication and mention of the grant of the patent: **16.08.2017**
(21) Application number: 10791675.1
(22) Date of filing: 18.06.2010
(51) Int. Cl.: C25C 7/02, B23K 1/00, B23K 1/19, B23K 35/28

(54) **METHOD FOR PRODUCING CONDUCTOR RAIL USED IN ELECTROLYSIS, AND CONDUCTOR RAIL**
VERFAHREN ZUR HERSTELLUNG EINER IN DER ELEKTROLYSE VERWENDETEN STROMSCHIENE UND STROMSCHIENE
PROCEDE DE PRODUCTION DE RAIL CONDUCTEUR EN ELECTROLYSE, ET RAIL CONDUCTEUR

(30) Priority: 25.06.2009 FI 20095718
(43) Date of publication of application: 02.05.2012
(73) Proprietor: Valvas Oy, 28200 Pori (FI)
(72) Inventor: AIRIKKA, Mikko, FI-28200 Pori (FI)
(74) Representative: Kolster Oy Ab
(86) International application number: PCT/FI2010/050521
(87) International publication number: WO 2010/149849

(56) References cited:
- WO-A1-2004/042121
- WO-A1-2006/117425
- WO-A1-2010/000930
- JP-A- S5 156 740
- US-A- 5 147 471
- US-A1- 2005 268 997
- US-A1- 2006 108 230
- DATABASE WPI Week 198222 23 April 1982 (1982-04-23) Thomson Scientific, London, GB; AN 1982-44718E XP002756815, FUKUMAKI T; SHIDA T: "Low temperature aluminium solder - comprises one or more of lithium, magnesium, manganese and calcium, aluminium and zinc", -& JP S57 67142 A (HITACHI LTD) 23 April 1982 (1982-04-23)
- TECHNO WELD: 'A Revolution in Aluminium welding' INTERNET CITATION, [Online] 15 September 2010, page 1, XP003027041 Retrieved from the Internet: <URL:http://web.archive.org/web/20080128152 423/www.techno-weld.co.uk/home.html> -& TECHNO WELD, [Online] 15 September 2010, pages 1 - 2, XP003027042 Retrieved from the Internet: <URL:http://web.archive.org/web/20080129223 934/www.techno-weld.co.uk/product.html> -& TECHNO WELD, [Online] 15 September 2010, pages 1 - 5, XP003027043 Retrieved from the Internet: <URL:http://web.archive.org/web/20080129143 310/www.techno-weld.co.uk/technical.html>

## Description

### BACKGROUND OF THE INVENTION

The invention relates to a method for providing a surface of a conductor rail used in electrolysis with an electric current supplier made of silver or a silver-based alloy and having a contact surface conducting well electricity, the conductor rail being meant to be brought into an electrical contact through the electric current supplier with a support rod used in an electrolysis basin.

The invention further relates to a conductor rail used in electrolysis and comprising an electric current supplier made of silver or a silver alloy and having a contact surface conducting well electricity, the conductor rail being meant to be brought into an electrical contact through the electric current supplier with a support rod used in an electrolysis basin.

Conductor rails, also called basin rails, used in electrolysis basins are meant to supply electric current to support rods. Two conductor rails typically carry a plural number of support rods, which are components separate from conductor rails. The support rods set into an electric contact with a conductor rail when placed onto the conductor rails, the rods resting on the conductor rails by their own weight. At contact points, electrical conductivity must be good. Also the conductor rails and the support rods must conduct electricity well so that unnecessary energy losses are avoided.

Conductor rails are conventionally made of copper, because the electrical conductivity of copper is excellent. Since conductor rails may be several meters long, they are heavy. Due to their heavy weight conductor rails are extremely expensive. When aiming at improved electrical conductivity at contact points, where the conductor rail delivers electricity into the support rods, it is known to use copper conductor rails having a silver layer at the contact points. A silver layer is easy to solder onto a copper conductor rail.

FI patent publication 114926 discloses a method where an electric current taker made of silver or a silver alloy is formed to the end of a support bar by coating, in which case thermal spray coating is applied. The electric current taker forms a metallurgic bond with aluminium. Thermal spray coating requires fairly high skills from the person performing the coating. Moreover, the end result is not particularly good in view of electrical conductivity and durability, because it is in practice very difficult to produce a good metallurgic bond with good electrical conductivity between aluminium and silver. Prior to coating, the materials to be coated have to be cleaned from oxide layers e.g. by sandblasting or wire brushing since otherwise no good contact/joint can be obtained with the coating. The cleaning work is time-consuming and does not always ensure a good end result. After the coating, a short thermal treatment may be carried out to strengthen the joint. Naturally, the thermal treatment adds to the amount of work. FI patent publication 114926 also discloses that the aluminium bar may first be coated with copper, after which a final coating is carried out with silver or a silver alloy. The latter procedure is complicated.

WO publication 2006/117425 discloses a method of attaching a silver piece to an end of an aluminium support bar so as to achieve an electric current taker. The purpose of the method is to produce a eutectic reaction between the silver piece and aluminium. It is difficult to attach the silver piece to the underlying aluminium surface. The aluminium bar has to be heated in stages and after heating an oxide layer has to be removed therefrom before the silver piece is attached thereto. The removal of the oxide layer, i.e. cleaning, is carried out by abrasion, for example. In order to control the oxidation reactions, it is advisable to carry out the heating in a reductive atmosphere, the creation of which naturally involves special arrangements as compared to being able to carry out the heating in the surrounding air. There is not much tolerance in the heating temperatures of the support bar, either, which is why the heating requires a great precision from the person performing it. In addition, the silver piece has to be pressed at a certain pressure against the heated aluminium surface in order to produce a joint. Advisably, the pressing is carried out in a spot-like manner and repeated cyclically. All in all, the work requires precision from the performer and takes a lot of time. US 2005/0268997 A1, US 2006/0108230 A1 and JPS 51-56740 disclose current conducting elements of electrolysis cells. JPS 57-67142 and US 5,147,471 disclose solders for aluminium parts.

### BRIEF DESCRIPTION OF THE INVENTION

It is an object of the invention to provide a method that allows a conductor bar and an electric current supplier thereof to be manufactured inexpensively, easily and rapidly.

The method of the invention is defined in claim 1.

The substance whose affinity to oxygen, i.e. the tendency to react with oxygen, is high must have a higher affinity to oxygen than aluminium.

Preferably, a solder with a zinc content of 85 to 98 percent by weight and an aluminium content of 1 to 10 percent by weight is used. The recommended amount of copper in the solder is 0.1 to 6 percent by weight. It is conceivable to replace copper with silver.

Preferably the substance with a high affinity to oxygen is magnesium, since when magnesium reacts with oxygen, a lot of heat is created, which causes the aluminium to melt and thus a tight and strong bond conducting also electricity quite well is created between the solder and the aluminium. The magnesium oxide that is formed raises to the surface of the solder.

Preferred embodiments of the method of the invention are disclosed in the accompanying claims 2 to 9.

The greatest advantages of the invention are that a contact surface with good electrical conductivity and an electric current taker are easily and rapidly provided to a conductor rail made of an inexpensive basic material (aluminium or aluminium alloy). The method is simple and so easy to implement that it may be carried out practically by anybody without any special skills. The method is very economical to realize.

A conductor rail of the invention is defined in claim 10.

The electric current supplier is preferably a piece of silver or a piece of a silver alloy with a thickness of 0.4 to 2.2 mm.

The preferred embodiments of the conductor rail of the invention are disclosed in the accompanying claims 11 to 14.

The greatest advantages of the conductor rail of the invention are that its manufacturing costs are significantly lower than the manufacturing costs of traditional conductor rails. In addition, its electrical conductivity and durability in the environment of use is extremely good. The electric current supplier with its contact surfaces wears in use but the electric supplier is also easy to replace when necessary: the old electric current supplier is removed from the conductor rail and a new one is installed in place with the method of the invention without having to melt the conductor rail itself.

### BRIEF DISCLOSURE OF THE FIGURES

In the following the invention is disclosed in greater detail with reference to an example and the accompanying drawing, in which
Figure 1 is a top view of an electrolysis basin;
Figure 2 is a section along line II-II of Figure 1;
Figure 3 illustrates a section according to line III-III of Figure 1;
Figure 4 is a top view of the structure of Figure 3;
Figure 5 illustrates a side view of a support rod in a conductor rail support combination of Figures 3 and 4;
Figure 6 illustrates a section along section line VI-VI of Figure 5;
Figures 7 and 8 illustrate a side and a top view, respectively, of a second embodiment of the conductor rail of the invention;
Figure 9 illustrates a side view of a support rod meant to be used together with the conductor rail of Figures 7 and 8;
Figure 10 illustrates a view from below of the support rod of Figure 9;
Figure 11 shows a section along section line XI-XI of Figure 9; Figure 12 shows the structure of the conductor rail of the invention in greater detail;
Figures 13 to 15 illustrate how to provide the conductor rail of Figure 12 with an electric current supplier; and
Figure 16 illustrates an alternative way of providing a conductor rail with an electric current taker.

### DETAILED DISCLOSURE OF THE INVENTION

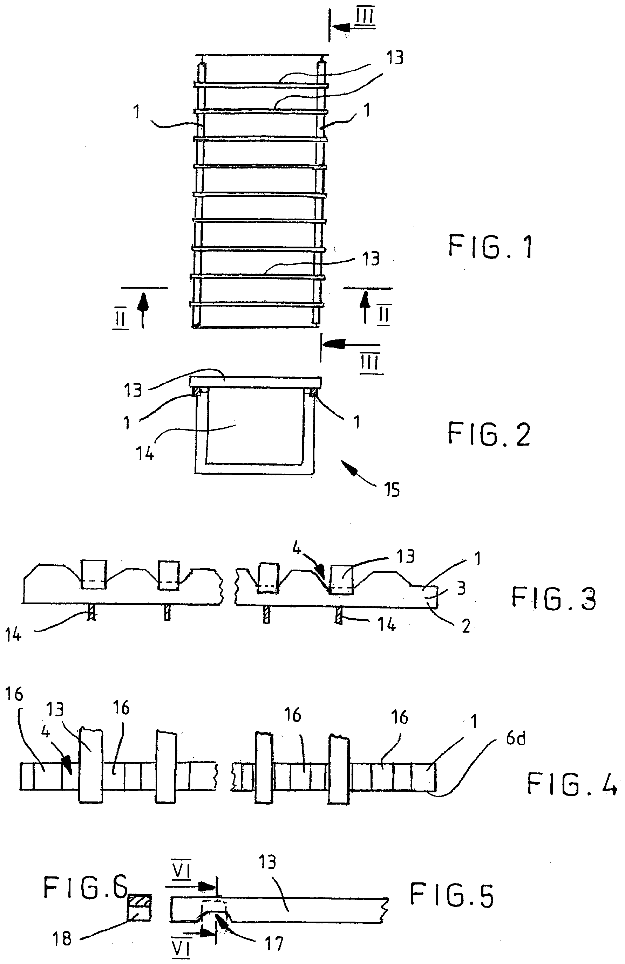

Figure 1 is a top view of a zinc electrolysis basin with two conductor rails 1 resting on the edges of an electrolysis basin 15. On top of the conductor rails 1 there are nine support rods 13 installed in such a way that they rest on the conductor rails. Naturally the number of the support rods 13 may vary. Suspended from the support rods 13 are aluminium cathodes 14 attached to them, see Figure 2, which shows a section along section line II - II of Figure 1.

Figures 3 and 4 show a side and a top view, respectively, of the conductor rail 1. The conductor rail 1 is made of an aluminium alloy or aluminium. The recommended height of the conductor rail 1 is 40 to 120 mm. On top of the conductor rail 1 there are support rods 13, which in Figure 3 are shown as an end view. As seen from the Figure, the upper surface of the conductor rail 1 is provided with teeth 16, the support rod 13 setting into a slot 4 between the teeth. Because the teeth 16 comprise inclined surfaces, the support rod 13 is guided into a desired contact location when it is lowered onto the conductor rail 1. The teeth 16 are 20 mm in height, for example. The length of the horizontal bottom level of the slot 4 is 20 mm, for example. The width of the conductor rail may be 30 mm and its length 4 m, for example. The length may vary greatly depending on the electrolysis basin: it may be within the range of 2 to 6 m.

Figure 5 is a side view of the support rod 13 placed onto the conductor rail 1 of Figures 3 and 4. A similar slot 17 as in the conductor rail is seen at the end of the support rod 13. The recommended material of the support rod 13 is an aluminium alloy or aluminium, the slot 17 being provided with a silver coating. The silver coating of the slot 4 forms the electric current supplier of the conductor rail 1. The width of the support rod 13 is slightly greater than the width of the bottom of the slot 4 in the conductor rail. The width of the support bar 13 is 16 mm, for example, when the length of the bottom level of the conductor rail slot 4 is 20 mm. When the support rod 13 rests on the conductor rail 1, it rests against the edges of the bottom level of the conductor rail slot 4 along two lines. These lines are located on the inclined surfaces of the slot 17. Figure 5 shows a conductor rail drawn with broken lines.

Figure 6 shows a section along line VI - VI of Figure 5. A second inclined surface 18 of the support rod is visible.

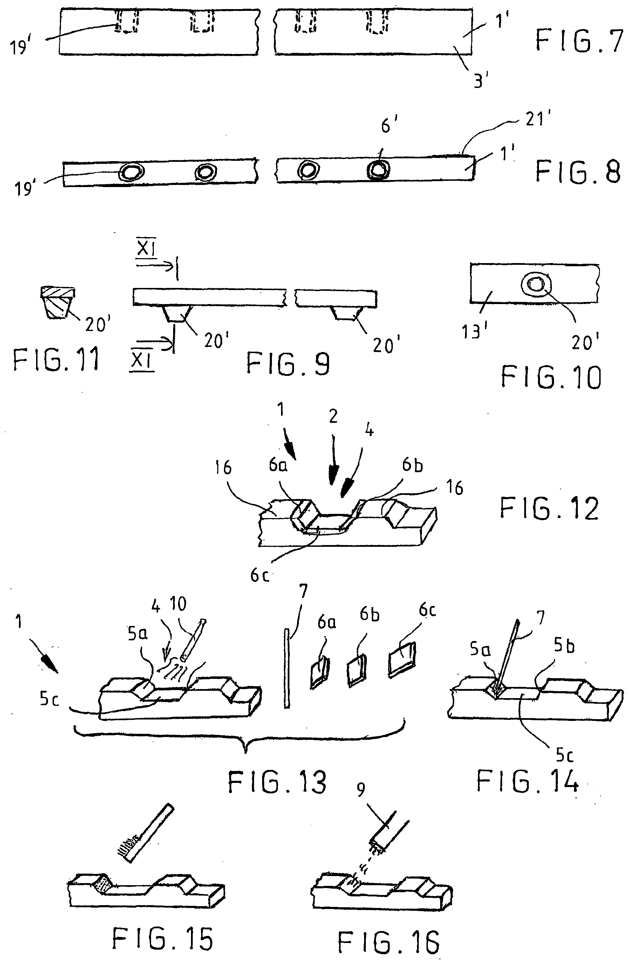

Figures 7 and 8 show a side view and a top view, respectively, of a second embodiment of a conductor rail 1'. The conductor rail 1' comprises a set of drillings 19'. The diameter of the drillings 19' is 40 mm, for example. The recommended depth of the drillings 19' is approximately the same as their diameter.

Figures 9 and 10 show a side view and a view from below, respectively, of a support rod 13' placed on the conductor rail 1'. The detailed structure/design of the support rods 13' differs from the structure/design of the support rods in Figures 5 and 6. As shown, the ends of the support rods 13' are provided with conical protrusions in the form of teeth 20'. At the free end the diameter of the teeth 20' is smaller than the diameter of the drilling 19' of the conductor rail 1'. Thanks to this, the support rod 13' is guided to a desired contact point by its own weight, when the rod is lowered onto the conductor rail 1'. The end of the teeth 20' with the large diameter has a diameter that is greater than the diameter of the drilling 19'. When the support rod 13' is in place in the drilling 19' of the conductor rail 1', it rests against the top edge of the drilling in a linear manner, thus forming a circular contact.

Figure 11 shows a section along section line XI- XI of Figure 9. The tooth 20' of the support rod is made of copper and it is attached to the aluminium body of the support rod 13' by friction welding, for example.

Figure 12 shows a part of the conductor rail 1 of Figures 3 and 4, the part comprising a location or an area meant for delivering electric current to a support rod. The location or area may be called an electric current supplier and it is generally designated with reference number 2. The Figure shows that a slot 4 between teeth 16 is coated with silver pieces 6a, 6b, 6c. The silver pieces 6a, 6b, 6c form the electric current supplier 2 and enable the conductor rail 1 to transfer current efficiently to the support rod to be placed onto the conductor rail.

Figures 13 to 15 illustrate the manufacturing of the conductor rod 1 shown in Figures 3, 4 and 6, or rather the implementation of the electric current supplier 2 thereof.

Figure 13 illustrates an aluminium conductor rod 1 that may be said to be in the form of a blank, because the electric current taker, i.e. the silver pieces 6a, 6b, 6c of Figure 12, is missing. The blank of the conductor rail 1 may be extruded aluminium with a number of slots 4 worked therein, Figure 13 only showing the one that is closest to the end of the conductor rail. The electric current taker is provided in the slot 4 by attaching small silver plates 6a, 6b, 6c with good electrical conductivity or small plates made of a silver-based alloy to both inclined surfaces 5a, 5b of the slot and to the bottom surface 5c of the slot. The plates 6a, 6b, 6c may also be referred to as pieces or slates. In Figure 13 the silver plates 6a, 6b, 6c are separate from the conductor rail 1, but in Figure 12 they are attached in place. The thickness of the plates 6a, 6b, 6c is preferably 0.4 to 2.2 mm and even more preferably 0.5 to 2 mm.

In Figure 13 reference number 7 designates a solder wire the use of which is explained below.

The solder wire 7 is a zinc-based alloy containing 85 to 98 percent by weight of zinc, 1 to 10 percent by weight of aluminium and 0.1 to 6 percent by weight of copper. The solder wire also contains minor amounts of manganese and magnesium. The solder marketed by Techno Weld ltd., Aston Works, West End, Aston, Oxfordshire OX18 2NP, Great Britain, is commonly available and may be used as the solder. The solder is sold in the form of electrodes (called Techno Weld electrodes). Presumably the copper contained in the electrode may be replaced with silver. An alternative to the Techno Weld product is a threadform product manufactured and marketed by New Technology Products, 1330 Post Oak Blvd., Suite 1600 Houston, Texas 77056-3017, USA, the trade name of the product being HTS-2000, in which case the instructions of use given to the product are followed. The zinc content of this type of a wire is about 80 percent by weight; the amount of aluminium is about 16 percent by weight and that of copper about 3 percent by weight. The wire also contains a little bit of magnesium, the magnesium content being about 0.2 percent by weight, for example. Presumably the recommended zinc content is within a range from 80 to 98 percent by weight and the aluminium content 1 to 20 percent by weight.

The plates 6a, 6b, and 6c are attached to the slot 4 by heating first the conductor rail 1 (still a blank in Figure 13) at the slot to a temperature of about 450°C, see Figure 13. Since the conductor rail is made of aluminium and aluminium reacts easily with surrounding oxygen, there is aluminium oxide on the surface of the conductor rail, including the location of the slot 4. It is commonly known that other metals are difficult to attach to an aluminium oxide surface. Nevertheless, in the method of the invention the slot in conductor rail 1 does not have to be cleaned from oxides. The heating temperature is not critical, it is preferably within the range from 370 to 550°C, but it may also be within the range from 300 to 600°C. If the temperature area is outside the range from 260 to 620°C, it is to be expected that the desired result is not obtained. Heating to a very high temperature also involves the risk that the aluminium rail melts (the melting point of aluminium being about 660°C). The heating temperature may be preferably followed by measuring the temperature of the surface of the slot 4. However, temperature measurement is not indispensable or even necessary when it is known how the solder wire 7 is to behave on the surface of the conductor rail 4 when the solder wire is brought into contact with the surface of the slot. The heating is preferably performed with a gas flame (a propane, butane or acetylene flame), in which case a welding nozzle and neck 10 is kept in motion to prevent it from causing a too high local heating. It is also conceivable that the heating is carried out by electrical induction or an electrical resistor. However, a disadvantage in induction heating is that aluminium melts fairly rapidly. Heating with an electrical resistor is, in turn, slow. Nevertheless induction heating and resistor heating may be used to achieve what is known as a basic heating. The purpose of basic heating is to provide a pre-heating that speeds up the manufacturing of the conductor rails when large manufacturing volumes are concerned: heating a conductor rail pre-heated with electricity to a working temperature with a flame takes only a while. After an electric current supplier has been attached to a newly produced conductor rail, a next, already pre-heated conductor rail will be provided with an electric current supplier.

From time to time the solder wire 7 is placed against the heated surface to check whether it attaches to the material underneath. When the temperature has risen high enough for the solder wire 7 to melt when being heated by the material underneath, solder is spread onto the surfaces 5a, 5b and 5c by moving the solder wire across the surfaces, whereby molten solder spreads onto the surfaces 5a, 5b and 5c. It is to be noted that the solder wire 7 is to melt due to heating caused by the material underneath and the solder wire is not to be heated with the welding nozzle and neck 10.

The molten metal surface is then brushed with a stainless steel or brass brush. The brushing is a very short and easy procedure. A brushing of about two or three seconds is typically enough. The brushing breaks the aluminium oxide layer underneath the solder, whereby the layer changes to aluminium and oxygen. Manganese contained in the solder possibly contributes to the breaking of the aluminium oxide layer. Oxygen released in the brushing reacts with the magnesium contained in the solder, because magnesium has a high tendency to react with oxygen. Magnesium reacts with oxygen more readily than aluminium and thus magnesium may be said to rob oxygen from aluminium. This is important so that oxygen can be removed from aluminium. When magnesium reacts with oxygen, an exothermal reaction releasing temperature takes place. Because of the released heat, temperature exceeds locally the melting point of aluminium and therefore the solder attaches extremely well to the aluminium surface underneath. The density of magnesium oxide is very low compared with the density of the solder, so it rises onto the surface of the solder, whereby an extremely good joint is formed between the solder and the aluminium underneath. The solder contains magnesium preferably at least 0.01 percent by weight, the amount of magnesium being 0.05 to 0.3 percent by weight, for example. Instead of magnesium, it is conceivable to use some other substance with a greater affinity to oxygen than the affinity of aluminium to oxygen and which forms an oxide with oxygen, the oxide having a density that is lower than the density of the solder to allow it to rise to the surface of the solder.

Instead of the brushing mentioned above, some other mechanical treatment may be used as well, such as scraping the surface. While the solder is still in a molten state, the silver pieces 6a, 6b and 6c are placed thereon and they stick to the molten solder in an instant and attach firmly thereto when the solder solidifies, see Figure 12, where the silver pieces are in place. When the solder has solidified, a strong joint conducting electricity quite well is formed. It is conceivable that the silver pieces 6a, 6b, 6c are pre-coated with the solder before they are set onto the solder that is on the aluminium.

If the electric current supplier is to be obtained by using pieces made of a silver alloy, instead of silver pieces, a silver alloy containing a little copper is preferably chosen. The copper content is 5 percent by weight, for example, and may vary within a range from 1 to 10 percent by weight, for example. Because of the copper the mechanical strength of the pieces 6a, 6b and 6c is greater than if the pieces were pure silver. However, the copper in the pieces 6a, 6b and 6c slightly weakens the corrosion resistance and electrical conductivity of the contact surface and the electric current taker.

The conductor rail of Figures 3 and 4 may be provided with a contact surface made of silver or a silver-based alloy with a method differing from the method of Figures 13 to 14.

Hence, it is not necessary to use pieces made of silver or a silver alloy, but it is conceivable that, instead, the electric current taker is produced thermally by spraying silver or a silver alloy onto the solder, in which case the solder has been allowed to solidify before the spraying. The spraying is illustrated in Figure 16. In that case the electric current supplier obtained by spraying and not by using silver pieces or pieces made of a silver alloy is the topmost. Thermal spraying may be carried using technology based on the gas combustion, for example. In High Velocity Oxy-Fuel the coating material (silver or a silver-based alloy) is supplied in a powder form with the help of a carrier gas to a spray pistol 9. In the combustion chamber of the spray pistol the coating material is molten and the coating in the molten state is directed towards the object to be coated. In an ordinary flame spraying a mixture of combustion gas and oxygen burns and melts the coating material, which may originally be in a powder form or in thread form. The molten coating material is blown to the object with compressed air. Thermal spraying is not described in greater detail in this context, because the method is known per se to a skilled person. A disadvantage of thermal spraying compared with using ready-made pieces of silver or a silver alloy is that thermal spraying is fairly difficult to carry out so that a good end result is obtained. An advantage of thermal spraying is that in principle it can be used for coating pieces of any geometrical shape. Consequently, thermal spraying is preferably used to provide the conductor rail 1' of Figures 7 and 8 with the electric current supplier 6'. Alternatively, the electric current supplier is obtained with the same principle as disclosed in connection with Figures 13 to 15, i.e. by using pieces made of silver or a silver alloy, the pieces being embedded into the drillings of an aluminium conductor rail blank.

The conductor rail 1 is also provided with an electric current taker 21 at a location through which the electric current is supplied to the conductor rail. The electric current taker 21 may be arranged to the second end 3 of the conductor rail 1, for example; see Figure 3. Also the conductor rail 1' of Figure 8 is provided with electric current takers 21'. The electric current takers 21, 21' are obtained as disclosed above.

The invention has been described above with reference to examples and it is therefore noted that the details of the invention may be implemented in various ways within the scope of the accompanying claims. Hence the electric current supplier of the conductor bar 1 of Figure 12, for example, may consist of a single piece of silver 6c corresponding to the length of the bottom of the slot 4 when the width of the support rod is smaller than the length of the bottom of the slot 4. In that case silver pieces are not placed on the diagonal surfaces. If the width of the support rod is greater than the length of the bottom of the slot, the support rod rests against the inclined surfaces of the slot 4, which must be provided with silver pieces 6a, 6b. In latter case the silver piece 6c is not needed at the bottom of the slot 4.

## Claims

1. A method for providing a surface (2) of a conductor rail (1, 1') used in electrolysis with an electric current supplier (6a, 6b, 6c, 6') made of silver or a silver-based alloy and having a contact surface having the electrical conductivity of silver or the silver-based alloy, the conductor rail being meant to be brought into an electrical contact through the electric current supplier (6a, 6b, 6c, 6') with a support rod (13, 13') used in an electrolysis basin, **characterized by** method steps according to which an upper surface of the conductor rail (1, 1') is provided with slots (4) and teeth (16) comprising inclinded surfaces, the slots being between the teeth (16) or the conductor rail is provided with drillings (19') for receiving support rods (13, 13'), and in that
a) the material selected for the conductor rail (1, 1') is a aluminium-based alloy or aluminium;
b) said surface (2) of the conductor rail (1, 1') having an aluminium surface is heated and on top of the heated surface there is provided a zinc-based solder (7), which contains a substance having a higher affinity to oxygen than aluminium once the temperature of the aluminium surface reaches a temperature exceeding the melting temperature of the solder, the solder (7) being spread in a molten state onto a surface area of a desired size of the aluminium surface so that a solder in a molten state is formed onto the surface,
c) an aluminium oxide layer formed between aluminium and the molten solder is broken by mechanical treatment so that oxygen is released from the aluminium oxide layer, the oxygen reacting with the substance having a higher affinity to oxygen than aluminium present in the solder (7) and forming together with said substance an oxide layer on the surface of the molten solder, and
d) the electric current supplier (6a, 6b, 6c, 6') made of silver or a silver-based alloy is provided on top of the solder (7) present on said surface area, the solder is allowed to solidify and the electric current supplier to become attached in place in the solidified solder.

2. A method according to claim 1, **characterized in that** the solder used is a zinc-based solder (7) having a zinc content of 85 to 98 percent by weight and an aluminium content of 1 to 10 percent by weight.

3. A method according to claim 1, **characterized in that** the solder used is a zinc-based solder (7) having a zinc content of 80 to 98 percent by weight, an aluminium content of 1 to 20 percent by weight and a copper content of 0.1 to 6 percent by weight.

4. A method according to any one of the preceding claims 1 to 3, **characterized by** using a solder (7) in which the substance with a higher affinity to oxygen than aluminium is magnesium.

5. A method according to any one of the preceding claims 1 to 4, **characterized by** using a solder (7) that contains manganese.

6. A method according to any one of the preceding claims 1 to 5, **characterized by** heating in step b) the surface of the conductor rail (1, 1') having an aluminium surface to a temperature of 370 - 550°C.

7. A method according to claim 1, **characterized by** breaking the oxide layer formed between aluminium and the solder (7) by brushing.

8. A method according to claim 7, **characterized by** using a piece of silver or a piece made of a silver alloy having a thickness of 0.4 to 2.2 mm as the electric current supplier (6a, 6b, 6c, 6').

9. A method according to any one of the preceding claims 1 to 7, **characterized by** bringing the electric current supplier on top of the surface area treated with the solder (7) by thermal spraying.

10. A conductor rail (1, 1') used in electrolysis and comprising an electric current supplier (6a, 6b, 6c, 6') made of silver or a silver alloy and having a contact surface having the electrical conductivity of silver or the silver alloy, the conductor rail being meant to be brought into an electrical contact through the electric current supplier with a support rod (13, 13') used in an electrolysis basin, **characterized in that** an upper surface of the conductor rail (1, 1') comprises slots (4) between teeth (16) comprising inclined surfaces, or is provided with drillings (19') for receiving support rods (13, 13'), **in that** the conductor rail (1, 1') is made of a aluminium-based alloy or aluminium and **in that** between the electric current supplier (6a, 6b, 6c, 6') and a surface of the conductor rail (1, 1') there is a zinc-based solder containing a substance having a higher affinity to oxygen than aluminium and which is arranged to attach the electric current supplier (6a, 6b, 6c, 6') to the conductor rail.

11. A conductor rail according to claim 10, **characterized in that** the zinc content of the solder is 80 to 98 percent by weight and the aluminium content is 1 to 20 percent by weight.

12. A conductor rail according to claim 1, **characterized in that** the substance having a higher affinity to oxygen than aluminium is magnesium.

13. A conductor rail according to claim 10, **characterized in that** the electric current supplier (6a, 6b, 6c, 6') is a piece of silver or a piece of a silver alloy having a thickness of 0.4 to 2.2 mm.

14. A conductor rail according to claim 10, **characterized in that** the conductor rail (1, 1') comprises electric current takers (21') made of silver or a silver alloy and having a contact surface having the electrical conductivity of silver or the silver alloy for bringing into an electrical contact with means for supplying current to the conductor rail.

## Patentansprüche

1. Verfahren zum Bereitstellen einer Oberfläche (2) einer Stromschiene (1, 1'), welche in Elektrolyse mit einem elektrischen Stromlieferant (6a, 6b, 6c, 6'), hergestellt aus Silber oder einer Silber-basierten Legierung, welcher eine Kontaktoberfläche mit einer Stromleitfähigkeit von Silber oder eine silber-basierten Legierung aufweist, wobei die Stromschiene in elektrischen Kontakt durch den elektrischen Stromlieferant (6a, 6b, 6c, 6') mit dem Stützstab (13, 13') werden soll, welcher in einem Elektrolysebad verwendet wird, **gekennzeichnet durch** Verfahrensschritte, durch welche eine obere Oberfläche der Stromschiene (1, 1') mit Schlitzen (4) und Zähnen (16) mit geneigten Oberflächen versehen wird,
wobei die Schlitze, welche zwischen den Zähnen (16) sind, oder die Stromschiene mit Bohrungen (19') zum Empfangen von Stützstäben (13, 13') versehen wird, und in dem
a) das für die Stromschiene (1, 1') ausgewählte Material eine Aluminium basierte Legierung oder Aluminium ist;
b) die Oberfläche (2) der Stromschiene (1, 1') mit einer Aluminiumoberfläche geheizt wird, und auf der geheizten Oberfläche, ein Zink-basiertes Lot (7) vorgesehen wird, welches eine Substanz mit einer größeren Affinität zu Sauerstoff als Aluminium enthält, sobald die Temperatur der Aluminiumoberfläche eine Temperatur oberhalb der Schmelztemperatur des Lots aufweist, wobei das Lot (7) in eine geschmolzenen Zustand sich auf einem Oberflächenbereich einer gewünschten Größe der Aluminiumoberfläche ausbreitet, so dass ein Lot in einem geschmolzenen Zustand auf der Oberfläche gebildet ist,
c) eine Aluminiumoxidschichte, welche zwischen Aluminium und dem geschmolzenen Lot gebildet ist, durch mechanische Behandlung so gebrochen wird, dass der Sauerstoff aus der Aluminiumoxidschicht freigesetzt wird, wobei der Sauerstoff mit der Substanz reagiert, welche eine höhere Affinität zu Sauerstoff als das im Lot (7) vorhandene Aluminium aufweist, und mit der Substanz zusammen eine Oxidschicht auf der Oberfläche des geschmolzenen Lots bildet, und
d) der elektrische Stromlieferant (6a, 6b, 6c, 6'), welcher aus Silber oder einer Silber-basierten Legierung hergestellt ist, auf dem Lot (7), welches auf dem Oberflächenbereich vorliegt, vorgesehen ist, wobei das Lot sich verfestigen kann und der elektrische Stromlieferant in einem Platz in dem erhärteten Lot angeheftet werden kann.

2. Verfahren nach Anspruch 1, **dadurch gekennzeichnet, dass** das Lot ein Zink-basiertes Lot (7) mit einem Zinkgehalt von 85 bis 98 Gewichtsprozent und einem Aluminiumgehalt von 1 bis 10 Gewichtsprozent ist.

3. Verfahren nach Anspruch 1, **dadurch gekennzeichnet, dass** das Lot ein Zink-basiertes Lot (7) mit einem Zinkgehalt von 80 bis 98 Gewichtsprozent, einem Aluminiumgehalt von 1 bis 20 Gewichtsprozent und einem Kupfergehalt von 0,1 bis 6 Gewichtsprozent ist.

4. Verfahren nach einem der vorstehenden Ansprüche 1 bis 3, **gekennzeichnet durch** Verwenden eines Lots (7), in welchem die Substanz mit einer höheren Affinität zu Sauerstoff als Aluminium Magnesium ist.

5. Verfahren nach einem der vorstehenden Ansprüche 1 bis 4, **gekennzeichnet durch** Verwenden eines Lots (7), dass Mangan enthält.

6. Verfahren nach einem der vorstehenden Ansprüche 1 bis 5, **gekennzeichnet durch** Heizen in Schritt b) der Oberfläche der Stromschiene (1, 1') mit einer Aluminiumoberfläche auf eine Temperatur von 370 -550°C.

7. Verfahren nach Anspruch 1, **gekennzeichnet durch** Brechen der Oxidschicht, welche zwischen dem Aluminium und dem Lot (7) gebildet ist, durch Bürsten.

8. Verfahren nach Anspruch 7, **gekennzeichnet durch** Verwenden eines Stücks Silber oder eines aus einer Silberlegierung hergestellten Stücks mit einer Dicke von 0,4 bis 2,2 mm als elektrischer Stromlieferant (6a, 6b, 6c, 6').

9. Verfahren nach einem der vorstehenden Ansprüche 1 bis 7, **gekennzeichnet durch** Bringen des elektrischen Stromlieferants oben auf den Oberflächenbereich, welcher mit dem Lot (7) durch thermisches Spritzen behandelt worden ist.

10. Stromschiene (1, 1'), welche in Elektrolyse verwendet wird und einen elektrischen Stromlieferant (6a, 6b, 6c, 6'), hergestellt aus Silber oder einer Silber-basierten Legierung, umfasst, welcher eine Kontaktoberfläche mit einer Stromleitfähigkeit von Silber oder einer silber-basierten Legierung aufweist, wobei die Stromschiene in elektrischen Kontakt durch den elektrischen Stromlieferant mit einem Stützstab (13, 13') gebracht werden soll, welcher in eine Elektrolysebad verwendet wird, **gekennzeichnet dadurch, dass** eine obere Oberfläche der Stromschiene (1, 1') Schlitze (4) zwischen Zähnen (16) mit geneigten Oberflächen umfasst, oder mit Bohrungen (19') zum Empfangen von Stützstäben (13, 13') versehen ist, in dem die Stromschiene (1, 1') aus einer Aluminium basierten Legierung oder Aluminium hergestellt ist, und darin dass zwischen einer Oberfläche einer des elektrischen Stromlieferant (6a, 6b, 6c, 6') und einer Oberfläche der Stromschiene (1, 1') ein Zink-basierten Lot ist, welches eine Substanz mit einer höheren Affinität zu Sauerstoff als Aluminium enthält und welches so angeordnet ist, den elektrischen Stromlieferant (6a, 6b, 6c, 6') an die Stromschiene zu heften.

11. Stromschiene nach Anspruch 10, **dadurch gekennzeichnet, dass** der Zinkgehalt des Lotes von 80 bis 98 Gewichtsprozent und der Aluminiumgehalt von 1 bis 20 Gewichtsprozent ist.

12. Stromschiene nach Anspruch 1, **dadurch gekennzeichnet, dass** die Substanz mit einer höheren Affinität zu Sauerstoff als Aluminium Magnesium ist.

13. Stromschiene nach Anspruch 10, **dadurch gekennzeichnet, dass** der elektrische Stromlieferant (6a, 6b, 6c, 6') ein Stück Silber oder eine Stück einer Silberlegierung mit einer Dicke von 0,4 bis 2,2 mm ist.

14. Stromschiene nach Anspruch 10, **dadurch gekennzeichnet, dass** die Stromschiene (1, 1') einen elektrischen Stromnehmer (21'), welcher aus Silber oder einer Silberlegierung hergestellt ist, umfasst, und eine Kontaktoberfläche mit einer elektrischen Leitfähigkeit von Silber oder der Silberlegierung zum In Kontakt bringen des elektrischen Kontakts mit Mitteln zum Liefern von Strom zur Stromschiene ist.

## Revendications

1. Procédé pour procurer une surface (2) d'un rail conducteur (1, 1') utilisé en électrolyse avec une alimentation de courant électrique (6a, 6b, 6c, 6') constituée d'argent ou d'un alliage à base d'argent et possédant une surface de contact ayant la conductivité électrique de l'argent ou de l'alliage à base d'argent, le rail conducteur étant destiné à être mis en contact électrique via l'alimentation de courant électrique (6a, 6b, 6c, 6') avec une tige de support (13, 13') utilisée dans un bain d'électrolyse, **caractérisé par** les étapes opératoires conformément auxquelles une surface supérieure du rail conducteur (1, 1') est munie de fentes (4) et de dents (16) comprenant des surfaces inclinées, les fentes étant situées entre les dents (16), ou bien le rail conducteur est muni d'alésages (19') pour la réception de tiges de support (13, 13'), et en ce que
a) la matière choisie pour le rail conducteur (1, 1') est un alliage à base d'aluminium ou l'aluminium ;
b) ladite surface (2) du rail conducteur (1, 1') possédant une surface en aluminium est chauffée et par-dessus la surface chauffée est procuré un métal d'apport (7) à base de zinc qui contient une substance possédant une affinité vis-à-vis de l'oxygène supérieure à celle de l'aluminium, une fois que la température de la surface en aluminium atteint une température supérieure à la température de fusion du métal d'apport, le métal d'apport (7) étant étalé à l'état fondu sur une zone superficielle de dimension désirée de la surface en aluminium d'une manière telle qu'un métal d'apport à l'état fondu se forme sur la surface ;
c) une couche d'oxyde d'aluminium formée entre l'aluminium et le métal d'apport en fusion est rompue par traitement mécanique, si bien que de l'oxygène est libéré à partir de la couche d'oxyde d'aluminium, l'oxygène réagissant avec la substance possédant une affinité vis-à-vis de l'oxygène supérieure à celle de l'aluminium présent dans le métal d'apport (7) et formant conjointement avec ladite substance une couche d'oxyde sur la surface du métal d'apport en fusion ; et
d) l'alimentation de courant électrique (6a, 6b, 6c, 6') constituée d'argent ou d'un alliage à base d'argent est procuré par-dessus le métal d'apport (7) présent sur ladite zone superficielle, le métal d'apport est amené à se solidifier et l'alimentation de courant électrique à se fixer en place dans le métal d'apport solidifié.

2. Procédé selon la revendication 1, **caractérisé en ce que** le métal d'apport utilisé est un métal d'apport à base de zinc (7) possédant une teneur en zinc de 85 à 98 % en poids et une teneur en aluminium de 1 à 10 % en poids.

3. Procédé selon la revendication 1, **caractérisé en ce que** le métal d'apport utilisé est un métal d'apport à base de zinc (7) possédant une teneur en zinc de 80 à 98 % en poids, une teneur en aluminium de 1 à 20 % en poids et teneur en cuivre de 0,1 à 6 % en poids.

4. Procédé selon l'une quelconque des revendications précédentes 1 à 3, **caractérisé par** le fait d'utiliser un métal d'apport (7) dans lequel la substance possédant une affinité vis-à-vis de l'oxygène supérieure à celle de l'aluminium est le magnésium.

5. Procédé selon l'une quelconque des revendications précédentes 1 à 4, **caractérisé par** le fait d'utiliser un métal d'apport (7) qui contient du manganèse.

6. Procédé selon l'une quelconque des revendications précédentes 1 à 5, **caractérisé par** le fait de chauffer à l'étape b) la surface du rail conducteur (1, 1') possédant une surface en aluminium jusqu'à une température de 370 - 550 °C.

7. Procédé selon la revendication 1, **caractérisé par** le fait de rompre la couche d'oxyde formée entre l'aluminium et le métal d'apport (7) par brossage.

8. Procédé selon la revendication 7, **caractérisé par** le fait d'utiliser un morceau d'argent ou un morceau constitué d'un alliage d'argent possédant une épaisseur de 0,4 à 2,2 mm à titre d'alimentation de courant électrique (6a, 6b, 6c, 6').

9. Procédé selon l'une quelconque des revendications précédentes 1 à 7, **caractérisé par** le fait d'amener l'alimentation de courant électrique par-dessus la zone superficielle traitée avec le métal d'apport (7) par pulvérisation thermique.

10. Rail conducteur (1, 1') utilisé en électrolyse et comprenant une alimentation de courant électrique (6a, 6b, 6c, 6') constituée d'argent ou d'un alliage à base d'argent et possédant une surface de contact ayant la conductivité électrique de l'argent ou de l'alliage à base d'argent, le rail conducteur étant destiné à être mis en contact électrique via l'alimentation de courant électrique avec une tige de support (13, 13') utilisée dans un bain d'électrolyse, **caractérisé en ce qu'**une surface supérieure du rail conducteur (1, 1') comprend des fentes (4) entre des dents (16) comprenant des surfaces inclinées ou est munie d'alésages (19') pour la réception de tiges de support (13, 13'), **en ce que** le rail conducteur (1, 1') est constitué d'un alliage à base d'aluminium ou d'aluminium et **en ce qu'**entre l'alimentation de courant électrique (6a, 6b, 6c, 6') et une surface du rail conducteur (1, 1'), est prévu un métal d'apport à base de zinc contenant une substance possédant une affinité vis-à-vis de l'oxygène supérieure à celle de l'aluminium et qui est conçu pour fixer l'alimentation de courant électrique (6a, 6b, 6c, 6') au rail conducteur.

11. Rail conducteur selon la revendication 10, **caractérisé en ce que** la teneur en zinc du métal d'apport s'élève de 80 à 98 % en poids et la teneur en aluminium s'élève de 1 à 20 % en poids.

12. Rail conducteur selon la revendication 1, **caractérisé en ce que** la substance possédant une affinité vis-à-vis de l'oxygène supérieure à celle de l'aluminium est le magnésium.

13. Rail conducteur selon la revendication 10, **caractérisé en ce que** l'alimentation de courant électrique (6a, 6b, 6c, 6') est un morceau d'argent ou un morceau d'alliage d'argent possédant une épaisseur de 0,4 à 2,2 mm.

14. Rail conducteur selon la revendication 10, **caractérisé en ce que** le rail conducteur (1, 1') comprend des préleveurs de courant électrique (21') constitués d'argent ou d'un alliage d'argent et possédant une surface de contact ayant la conductivité électrique de l'argent ou de l'alliage d'argent pour l'amener en contact électrique avec des moyens destinés à alimenter le rail conducteur en courant.
